(19) Europäisches Patentamt
European Patent Office
Office européen des brevets

(11) **EP 4 597 674 A1**

(12) **EUROPEAN PATENT APPLICATION**
published in accordance with Art. 153(4) EPC


(43) Date of publication:
**06.08.2025 Bulletin 2025/32**

(21) Application number: **23858854.5**

(22) Date of filing: **27.06.2023**

(51) International Patent Classification (IPC):
***H01M 10/0567*** *(2010.01)* ***H01M 10/0525*** *(2010.01)*

(52) Cooperative Patent Classification (CPC):
Y02E 60/10

(86) International application number:
**PCT/CN2023/102555**

(87) International publication number:
**WO 2024/045816 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 CN 202211043846**



(71) Applicant: **Shenzhen Capchem Technology Co., Ltd**
**Shenzhen, Guangdong 518118 (CN)**

(72) Inventors:
- **LIU, Zhongbo**
  **Shenzhen, Guangdong 518118 (CN)**
- **HUANG, Xiong**
  **Shenzhen, Guangdong 518118 (CN)**
- **YAN, Siwen**
  **Shenzhen, Guangdong 518118 (CN)**
- **ZHENG, Zhongtian**
  **Shenzhen, Guangdong 518118 (CN)**

(74) Representative: **Herrero & Asociados, S.L.**
**Edificio Aqua - Agustín de Foxá, 4-10**
**28036 Madrid (ES)**


(54) **LITHIUM ION BATTERY**


(57) To address the issue that it is difficult to ensure both cycle performance and storage performance for the existing high-voltage lithium cobalt oxide battery, the application provides a lithium-ion battery, which includes a positive electrode, a negative electrode and a non-aqueous electrolyte. The positive electrode includes a positive electrode material layer; the positive electrode material layer includes a positive electrode active material, which includes a lithium cobalt oxide doped or coated with elment aluminum; the non-aqueous electrolyte includes a non-aqueous organic solvent, a lithium salt and an additive; the additive includes a first additive and a second additive, the first additive includes a cyclic sultone, and the second additive includes a compound represented by structural formula 1:

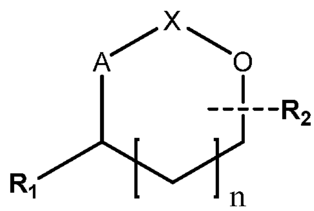

Structural formula 1

the lithium-ion battery meets the following requirements: $0.1 \leq a/c \leq 5$; $0.3 \leq b/c \leq 20$; and $0.2 \leq a \leq 1$, $0.1 \leq b \leq 5$, $0.1 \leq c \leq 5$. The lithium-ion battery provided by the application has good high-temperature storage performance and high-temperature cycle performance, and is beneficial to prolonging the battery service life.


EP 4 597 674 A1

## Description

### Technical field

The application belongs to the technical field of energy storage devices, and particularly relates to a lithium-ion battery.

### Background

Lithium-ion batteries are a new generation of rechargeable batteries that emerged after after traditional batteries such as Ni-MH. They were first developed by Sony Corporation of Japan in 1990. Lithium-ion batteries are widely utilized because of their simple working principle, good safety, long charging and discharging life, high working voltage, high energy density, small size, long cycle life, and wide temperature range.

With the continuous improvement of cruising range of new energy vehicles and the continuous development of thin and light 3C digital products, the battery industry increasingly requires high energy density of lithium-ion batteries. The design of lithium-ion batteries with high energy density can be conducted with the following aspects: 1) improving the gram capacity of positive electrode materials; 2) improve battery discharge platform; 3) increase the proportion of active materials in the battery; etc. Increasing the charging cut-off voltage of lithium-ion battery is one of the important ways to increase the energy density of battery, because with the increase of the charging cut-off voltage, the positive electrode material can achieve a higher gram capacity, and the discharge platform is obviously improved, which has an immediate effect on the improvement of energy density.

Lithium cobalt oxide is becoming a widely used positive electrode material for high-voltage batteries because of its high working potential. However, with the gradual increase of battery voltage, the positive electrode material enters a higher level of lithium deintercalation state, the structural stability of the material will become worse, and the surface oxidation will also be significantly improved. With the development of positive electrode materials with high gram capacity, the instability of material structure and its high oxidation are particularly obvious at the electrode/electrolyte interface, which appears to be: the battery generates gas, the internal resistance increases rapidly, and the capacity decreases sharply. More importantly, rapid gas generation will lead to great deformation for pouch battery, and eventually the gas will burst the aluminum-plastic film battery and cause explosion, combustion and other dangerous situations. Therefore, it is necessary to develop an electrolyte with better safety performance.

In order to improve these problems, the protection of battery materials is one of the important means. At present, there are two ways to improve battery safety from the perspective of electrolyte. One is to choose nitrile additives commonly used in the lithium cobalt oxide battery system to strengthen the protection and inhibit the dissolution of metal ions from positive electrode (LCO), thus alleviating the decomposition of electrolyte catalyzed by CO ions and improving high-temperature gas generation. The other is to choose more commonly used sultone compounds to inhibit high temperature gas generation. However, these two methods have greatly deteriorated the cycle performance of the whole battery, which can not effectively ensure both the cycle performance and storage performance. For example, the currently known electrolyte containing nitrile additives has some shortcomings in the application of the battery, which has a great impact on the impedance growth of the battery, and greatly sacrifices the rate, power performance and low-temperature performance, making it more difficult to meet the requirements for digital batteries with high requirements for fast charging. For the electrolyte of sultone additives, it can indeed inhibit the gas generation during storage, but the impedance of the battery deteriorates greatly. Meanwhile, the consumption of additives in the later stages will result in a sharp decrease in cycle capacity. Therefore, the high voltage trend of the lithium cobalt oxide and the current development trend of materials make it hard to ensure the fast charging rate,cycle, storage and other performances for high voltage lithium cobalt oxide.

### Summary of the invention

To address the issue that it is difficult to ensure both cycle performance and storage performance for the existing high-voltage lithium cobalt oxide battery, the application provides a lithium-ion battery,

The technical solutions adopted by the application to solve the technical problems are as follows.

The application provides a lithium-ion battery, including a positive electrode, a negative electrode and a non-aqueous electrolyte, and the positive electrode includes a positive electrode material layer, the positive electrode material layer includes a positive electrode active material, the positive electrode active material includes a lithium cobalt oxide doped or coated with element aluminum, the non-aqueous electrolyte includes a non-aqueous organic solvent, a lithium salt and an additive, and the additive includes a first additive and a second additive; the first additive includes at least one cyclic sultone compound selected from 1,3-propane sultone, 1,4-butane sultone and 1,3- propylene sultone, and the second additive includes a compound represented by structural formula 1:

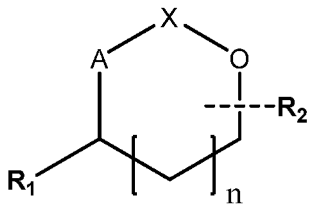

Structural formula 1

n is 0 or 1, A is selected from C or O, and X is selected from

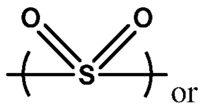 or 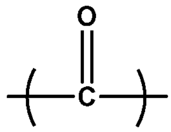,

$R_1$ and $R_2$ are independently selected from H,

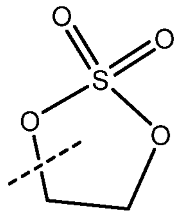, 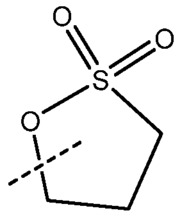, 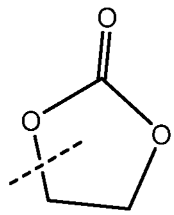,

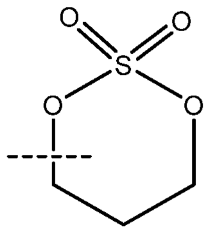 or 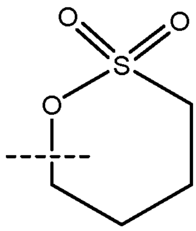,

$R_1$ and $R_2$ are not selected from H at the same time, and X, $R_1$ and $R_2$ contain at least one sulfur atom;
the lithium-ion battery meets the following requirements:

$0.1 \leq a/c \leq 5$; $0.3 \leq b/c \leq 20$, and $0.2 \leq a \leq 1$, $0.1 \leq b \leq 5$, $0.1 \leq c \leq 5$;
a is a percentage mass content of element Al in the positive electrode material layer, in %;
b is a percentage mass content of the first additive in the non-aqueous electrolyte in %, and
c is a percentage mass content of the second additive in the non-aqueous electrolyte, in%.

Alternatively, the lithium-ion battery meets the following requirements:
$0.3 \leq a/c \leq 1$; $0.5 \leq b/c \leq 4$.

Alternatively, the percentage mass content (a) of element Al in the positive electrode material layer is 0.3%-0.7%.

Alternatively, the percentage mass content (b) of the first additive in the non-aqueous electrolyte is 0.5%-2%.

Alternatively, the percentage mass content (c) of the second additive in the non-aqueous electrolyte is 0.5%-2.5%.

Alternatively, the compound represented by structural formula 1 is selected from at least one of the following compounds:

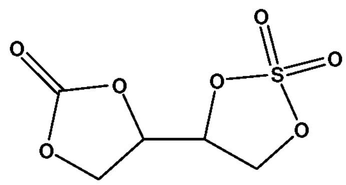
Compound 1

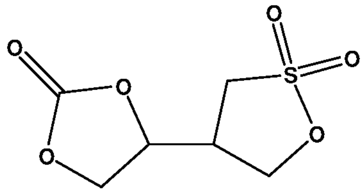
Compound 2

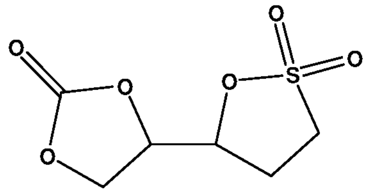
Compound 3

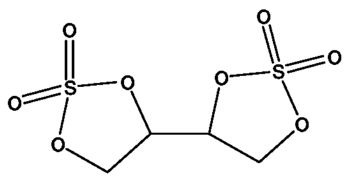
Compound 4

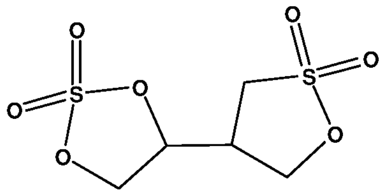
Compound 5

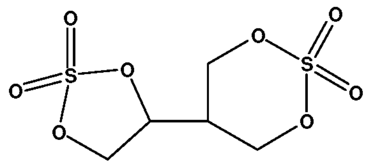
Compound 6

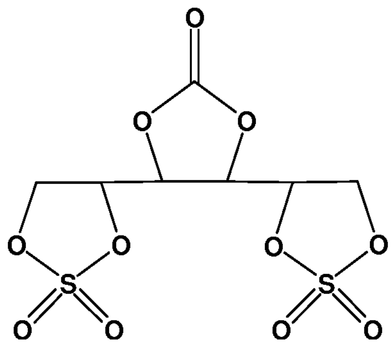
Compound 7

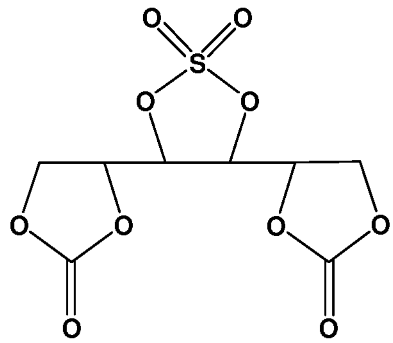
Compound 8

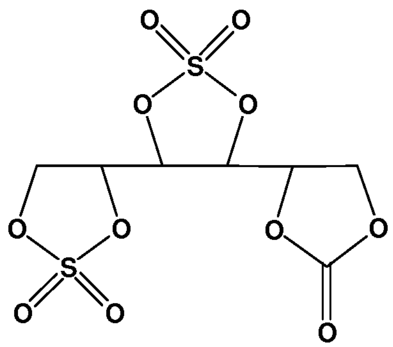
Compound 9

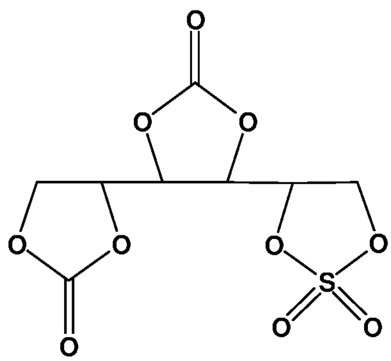
Compound 10

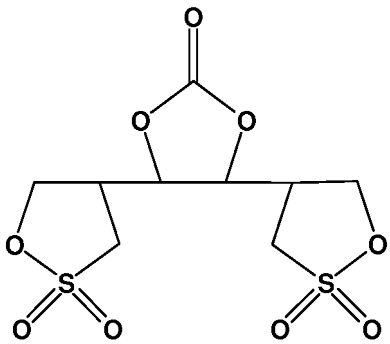

Compound 11

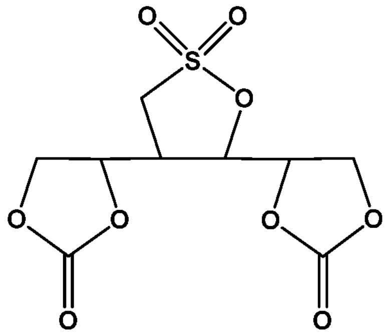

Compound 12

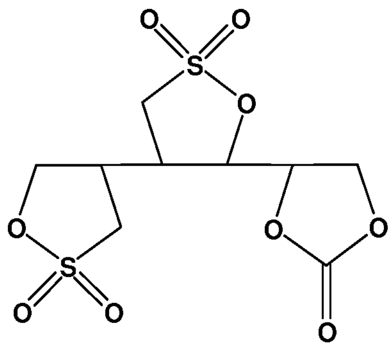

Compound 13

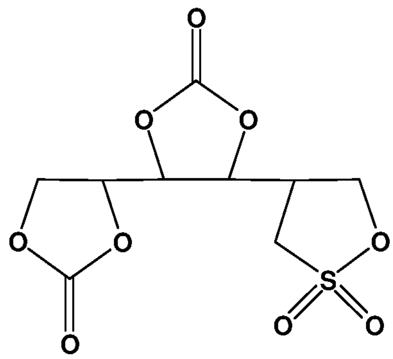

Compound 14

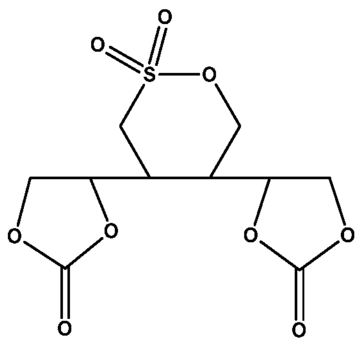

Compound 15

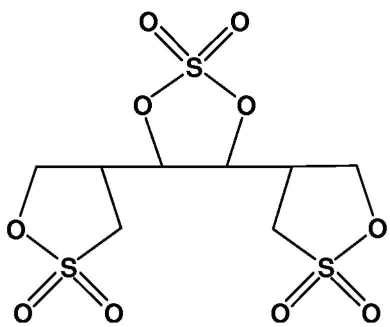

Compound 16

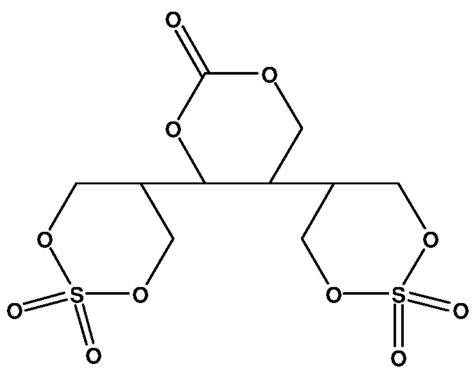

Compound 17

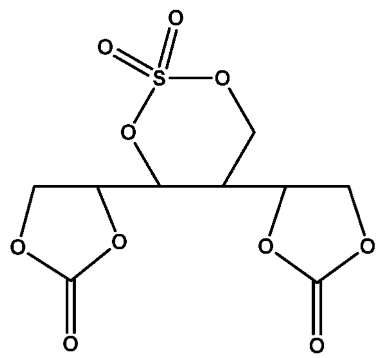

Compound 18

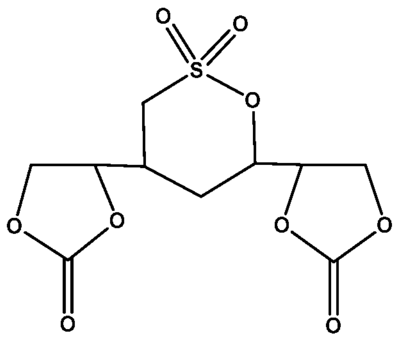

Compound 19

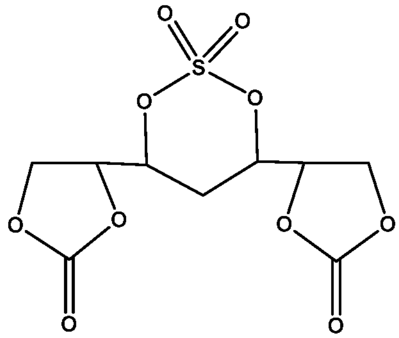

Compound 20

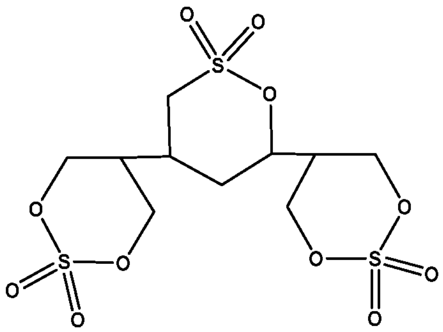

Compound 21

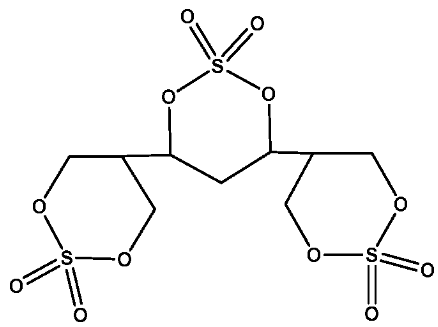

Compound 22.

Alternatively, the lithium salt includes at least one of $LiPF_6$, LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, $LiSO_3F$, LiTOP, LiDODFP and lithium salts of lower aliphatic carboxylic acids.

Alternatively, the non-aqueous organic solvent includes at lease one of ether solvent, nitrile solvent, carbonate solvent and carboxylic ester solvent.

Alternatively, the additive further includes at least one of cyclic sulfate compounds, cyclic carbonate compounds, phosphate compounds, borate compounds and nitrile compounds;

the content of the additive is 0.01%-30% based on the total mass of the non-aqueous electrolyte being 100%.

Alternatively, the cyclic sulfate compound is at least one selected from the group consisting of ethylene sulfate, propylene sulfate, methyl ethylene sulfate,

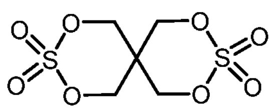

and

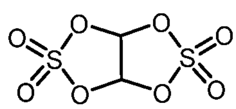

;

the cyclic carbonate compound is selected from at least one of vinylene carbonate, vinylethyl carbonate, methylene ethylene carbonate, fluoroethylene carbonate, trifluoromethyl ethylene carbonate, bis-fluoroethylene carbonate or a compound represented by structural formula 2,

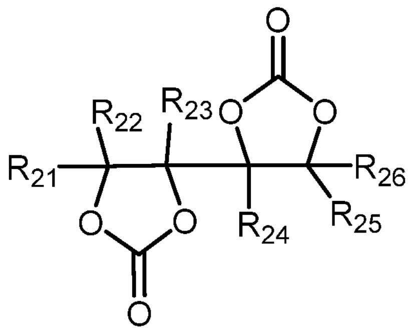

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;
the phosphate compound is selected from at least one of tri (trimethylsilane) phosphate, tri (trimethylsilane) phosphite or a compound represented by structural formula 3:

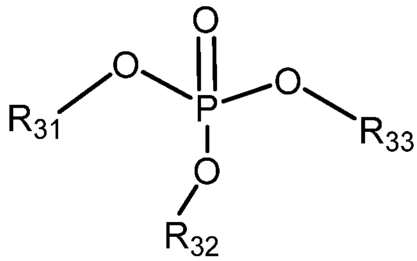

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, $-Si(C_mH_{2m+1})_3$, m is a natural number of 1-3, and at least one of $R_{31}$, $R_{32}$ and $R_{33}$ is unsaturated hydrocarbon group;
the borate compound is selected from at least one of tris (trimethylsilane) borate and tris (triethyl silicane) borate; and the nitrile compound is selected from at least one of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

According to the lithium-ion battery provided by the application, the lithium cobalt oxide with higher energy density and working voltage is used as a positive electrode active material. Meanwhile, in order to solve the problems of high-temperature storage and high-temperature cycle of the lithium cobalt oxide material, element aluminum is doped or coated in the lithium cobalt oxide, cyclic sultone is added into a non-aqueous electrolyte as a first additive, and a compound represented by structural formula 1 is used as a second additive. The first additive and second additive can be decomposed together on the surface of the positive electrode material layer in the battery formation process to form an interface film, which can effectively maintain the crystal structure stability of the lithium cobalt oxide. Moreover, element Al in the positive electrode material layer can inhibit the full decomposition of the first additive and second additive during the formation of battery. This allows a portion of the first additive and second additive to remain in the non-aqueous electrolyte after the formation. Moreover, the interface film on the surface of the positive electrode material layer will be damaged during the subsequent battery charging and discharging cycle or during high-temperature storage. At this stage, the first additive and second additive remaining in the non-aqueous electrolyte can continue to repair the interface film at the damaged position.. Therefore, through research, it is concluded that when the percentage mass content (a) of element Al in the positive electrode material layer, percentage mass content (b) of the first additive in the non-aqueous electrolyte and percentage mass content (c) of the second additive in the non-aqueous electrolyte meet the requirements of $0.1 \leq a/c \leq 5$; $0.3 \leq b/c \leq 20$, and $0.2 \leq a \leq 1$, $0.1 \leq b \leq 5$, $0.1 \leq c \leq 5$, the obtained lithium-ion battery has the best storage performance and cycle performance, which is conducive to prolong the service life of battery.

## Detailed description of preferred embodiments

In order to make the technical problems, technical solutions and beneficial effects of the present application more clear, the application will be further explained in detail below with reference to the drawings and embodiments. It should be

understood that the specific embodiments described here are only used to illustrate the application, rather than to limit the application.

The embodiment of this application provides a lithium-ion battery, including a positive electrode, a negative electrode and a non-aqueous electrolyte, and the positive electrode includes a positive electrode material layer, the positive electrode material layer includes a positive electrode active material, the positive electrode active material includes a lithium cobalt oxide doped or coated with element aluminum, the non-aqueous electrolyte includes a non-aqueous organic solvent, a lithium salt and an additive, and the additive includes a first additive and a second additive; the first additive includes at least one cyclic sultone compound selected from 1,3-propane sultone, 1,4-butane sultone and 1,3-propylene sultone, and the second additive includes a compound represented by structural formula 1:

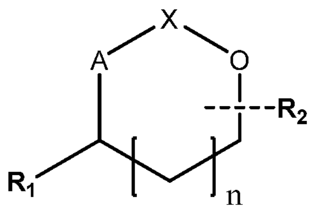

Structural formula 1

n is 0 or 1, A is selected from C or O, and X is selected from

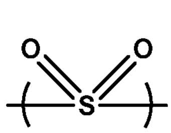 or 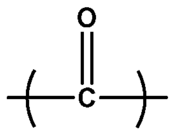,

$R_1$ and $R_2$ are independently selected from H,

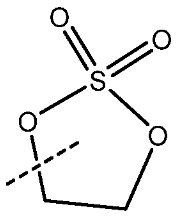, 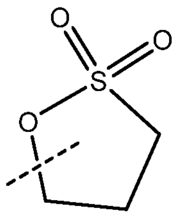, 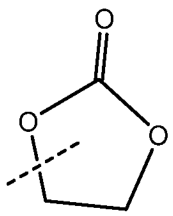,

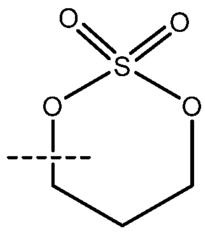 or 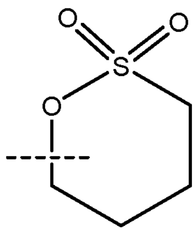,

$R_1$ and $R_2$ are not selected from H at the same time, and X, $R_1$ and $R_2$ contain at least one sulfur atom;
the lithium-ion battery meets the following requirements:

$0.1 \leq a/c \leq 5$; $0.3 \leq b/c \leq 20$, and $0.2 \leq a \leq 1$, $0.1 \leq b \leq 5$, $0.1 \leq c \leq 5$;
a is a percentage mass content of element Al in the positive electrode material layer, in %;
b is a percentage mass content of the first additive in the non-aqueous electrolyte in %, and
c is a percentage mass content of the second additive in the non-aqueous electrolyte, in%.

According to the lithium-ion battery provided by the application, the lithium cobalt oxide with higher energy density and working voltage is used as a positive electrode active material. Meanwhile, in order to solve the problems of high-temperature storage and high-temperature cycle of the lithium cobalt oxide material, element aluminum is doped or

coated in the lithium cobalt oxide, cyclic sultone is added into a non-aqueous electrolyte as a first additive, and a compound represented by structural formula 1 is used as a second additive. The first additive and second additive can be decomposed together on the surface of the positive electrode material layer in the battery formation process to form an interface film, which can effectively maintain the crystal structure stability of the lithium cobalt oxide. Moreover, element Al in the positive electrode material layer can inhibit the full decomposition of the first additive and second additive during the formation of battery. This allows a portion of the first additive and second additive to remain in the non-aqueous electrolyte after the formation. Moreover, the interface film on the surface of the positive electrode material layer will be damaged during the subsequent battery charging and discharging cycle or during high-temperature storage. At this stage, the first additive and second additive remaining in the non-aqueous electrolyte can continue to repair the interface film at the damaged position.. Therefore, through research, it is concluded that when the percentage mass content (a) of element Al in the positive electrode material layer, percentage mass content (b) of the first additive in the non-aqueous electrolyte and percentage mass content (c) of the second additive in the non-aqueous electrolyte meet the requirements of $0.1 \leq a/c \leq 5$; $0.3 \leq b/c \leq 20$, and $0.2 \leq a \leq 1$, $0.1 \leq b \leq 5$, $0.1 \leq c \leq 5$, the obtained lithium-ion battery has the best storage performance and cycle performance, which is conducive to prolong the service life of battery.

In some embodiments, when n is 0, the compound represented by structural formula 1 is:

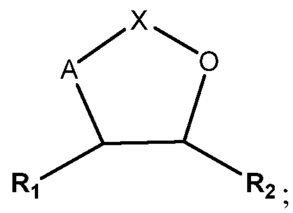

A is selected from C or O, and X is selected from

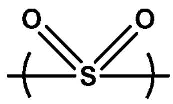 or 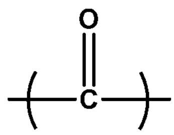,

$R_1$ and $R_2$ are independently selected from H,

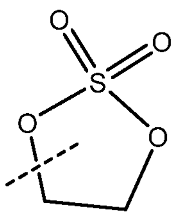, 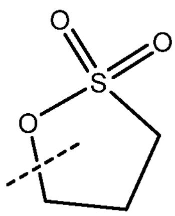, 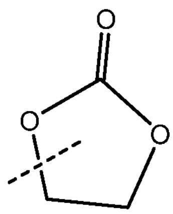, 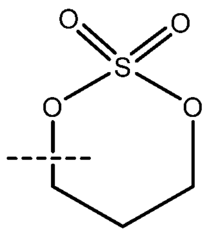

or

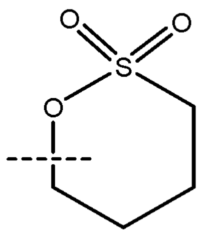,

$R_1$ and $R_2$ are not selected from H at the same time, and X, $R_1$ and $R_2$ contain at least one sulfur atom.

In some embodiments, when n is 1, the compound represented by structural formula 1 is:

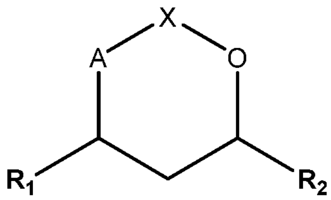 or 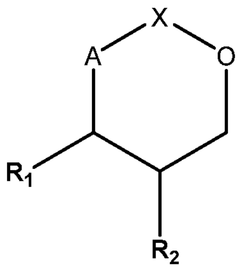 ;

A is selected from C or O, and X is selected from

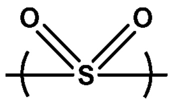 or 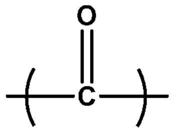,

$R_1$ and $R_2$ are independently selected from H,

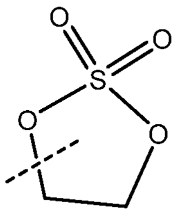, 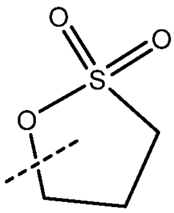, 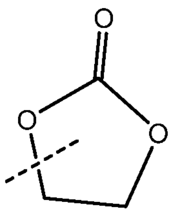, 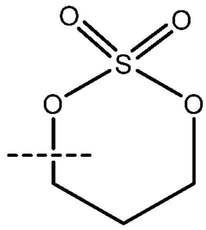

or

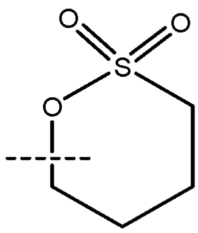,

$R_1$ and $R_2$ are not selected from H at the same time, and X, $R_1$ and $R_2$ contain at least one sulfur atom.

In a preferred embodiment, the lithium-ion battery meets the following requirements:

$$0.3 \leqslant a/c \leqslant 1;\ 0.5 \leqslant b/c \leqslant 4.$$

By managing the percentage mass content (a) of element Al in the positive electrode material layer, percentage mass content (b) of the first additive in the non-aqueous electrolyte and percentage mass content (c) of the second additive in the non-aqueous electrolyte, when these three factors satisfy the above relationship, the crystal structure of the positive electrode material can be stably charged and discharged for a long time. Meanwhile, the adverse effects caused by the oxidative decomposition of the electrolyte solvent are obviously reduced, and the inflation and deformation of the battery for high-temperature application are obviously improved, thus prolonging the cycle life of the battery.

Aluminum-containing compounds such as aluminum oxide, aluminum acetate, aluminum oxalate or aluminum isopropoxide are usually added for the preparation process of lithium cobalt oxide, which is an active material of positive electrode, so as to form a lithium cobalt oxide doped or coated with aluminum. The preparation method may be a conventional preparation method in the field. By controlling the addition amount of aluminum-containing compounds, the percentage mass content of aluminum in the whole positive electrode material layer is controlled. The element aluminum is combined with the lithium cobalt oxide in the form of doping or coating. When the doping process is conducted, the element aluminum is embedded in the crystal lattice of lithium cobalt oxide to replace part of the cobalt position, thus forming a stable doping state and inhibiting the dissolution of metal ions. When element aluminum is doped, it forms a unique layered

distribution due to slow diffusion kinetics during sintering, which is mainly concentrated on the surface of lithium cobalt oxide. It also has a similar effect when it is coated. When the coating process is conducted, the element aluminum is coated on the outer surface of lithium cobalt oxide in the form of oxide or metal salt to avoid direct contact between the lithium cobalt oxide and non-aqueous electrolyte. In the coating process, aluminum-containing compound precursors can be used for coating, such as at least one of aluminum oxide, aluminum acetate, aluminum oxalate or aluminum isopropoxide, and then the coating layer of aluminum oxide or metal salt can be obtained by calcination.

In a specific embodiment, the percentage mass content (a) of element Al in the positive electrode material layer" may be 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95% or 1%.

In a preferred embodiment, the percentage mass content (a) of element Al in the positive electrode material layer is 0.3%-0.7%.

The percentage mass content (a) of element Al in the positive electrode material layer is related to the consumption of the first additive and second additive in the non-aqueous electrolyte in the initial formation of battery. When the percentage mass content (a) of element Al in the positive electrode material layer is too high, the decomposition inhibition effect of the first additive and second additive in the non-aqueous electrolyte would be too strong, which affects the formation quality and stability of the interface film on the positive electrode material layer, and is not conducive to maintaining the stability of the crystal structure of the positive electrode material. When the percentage mass content (a) of element Al in the positive electrode material layer is too low, the first additive and second additive in the non-aqueous electrolyte would be completely consumed in the initial formation process, then in the subsequent charge-discharge cycle, the interface film damage caused by the volume change of the positive electrode material will directly lead to the decomposition of electrolyte solvent, resulting in gas generation and battery capacity reduction.

In a specific embodiment, the percentage mass content (b) of the first additive in the non-aqueous electrolyte may be 0.1%, 0.2%, 0.4%, 0.5%, 0.7%, 0.9%, 1.0%, 1.1%, 1.3%, 1.5%, 1.8%, 2.0%, 2.3%, 2.7%, 3.0%, 3.3%, 3.7%, 4.0%, 4.3%, 4.7% or 5.0%.

In a preferred embodiment, the percentage mass content (b) of the first additive in the non-aqueous electrolyte is 0.5%-2%.

The first additive and second additive have synergistic effect in improving the quality of the formed interface film. When the percentage mass content (b) of the first additive in the non-aqueous electrolyte is too low, it is difficult to have synergistic effect with the second additive, which affects the film-forming quality of the interface film on the positive electrode material layer. When the percentage mass content (b) of the first additive in the non-aqueous electrolyte is too high, it is likely to lead to an impedance increase of lithium-ion batteries, which is not conducive to the improvement of the cycle performance of lithium-ion batteries.

In a specific embodiment, the percentage mass content (c) of the second additive in the non-aqueous electrolyte may be 0.1%, 0.2%, 0.4%, 0.5%, 0.7%, 0.9%, 1.0%, 1.1%, 1.3%, 1.5%, 1.8%, 2.0%, 2.3%, 2.7%, 3.0%, 3.3%, 3.7%, 4.0%, 4.3%, 4.7% or 5.0%.

In a preferred embodiment, the percentage mass content (c) of the second additive in the non-aqueous electrolyte is 0.5%-2.5%.

If the percentage mass content (c) of the second additive in the non-aqueous electrolyte is too low, it is difficult to play a synergistic role with the first additive, and the improvement of high-temperature cycle and high-temperature storage performance of lithium-ion batteries would be limited. When the percentage mass content (c) of the second additive in the non-aqueous electrolyte is too high, the thickness of the interface film on the surface of the positive electrode material layer would be too large, which will affect the intercalation and deintercalation of lithium-ions in the positive electrode material layer and the ion conduction efficiency.

In some embodiments, the compound represented by structural formula 1 is selected from at least one of the following compounds:

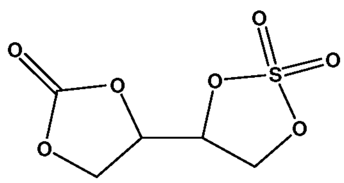

Compound 1

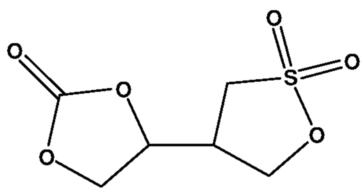

Compound 2

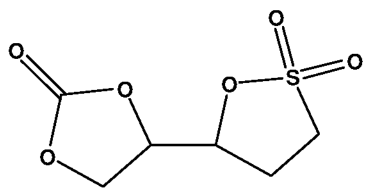

Compound 3

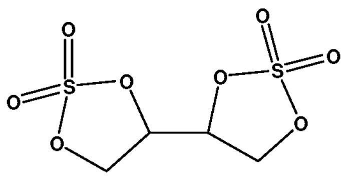

Compound 4

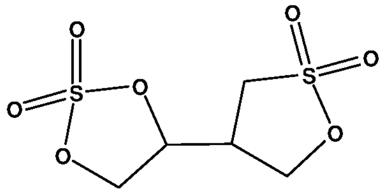

Compound 5

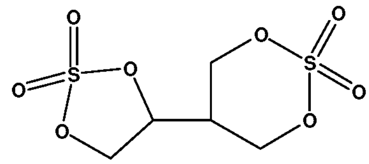

Compound 6

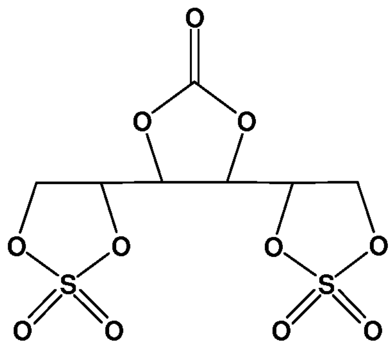

Compound 7

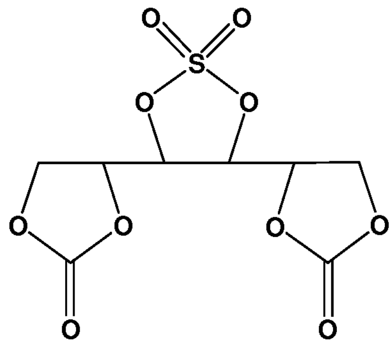

Compound 8

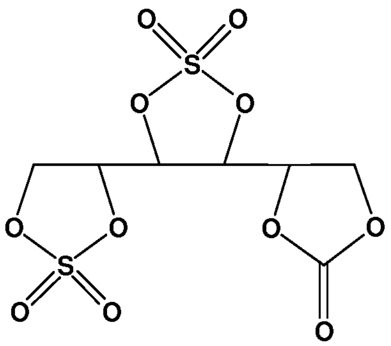

Compound 9

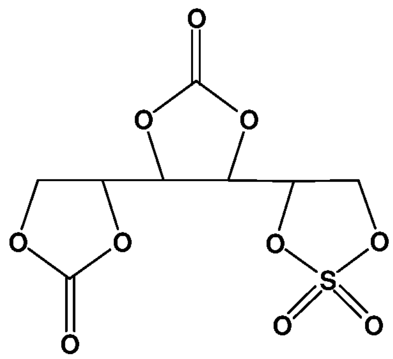

Compound 10

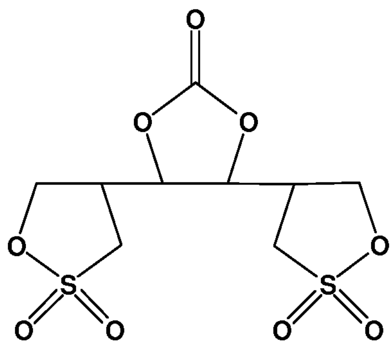

Compound 11

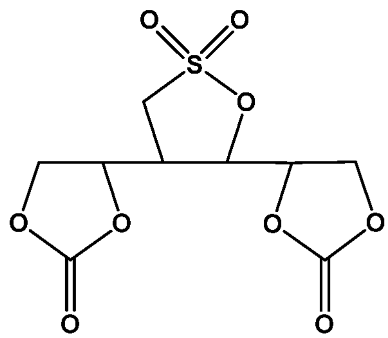

Compound 12

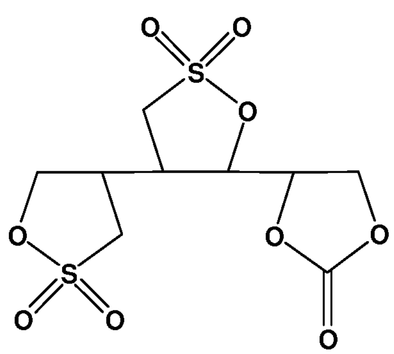

Compound 13

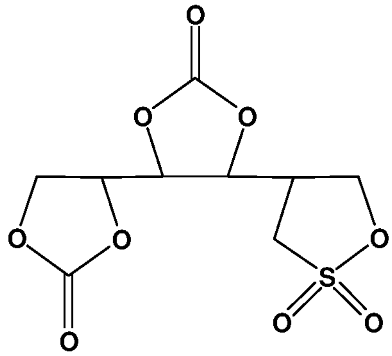

Compound 14

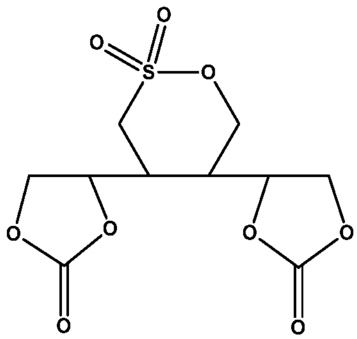

Compound 15

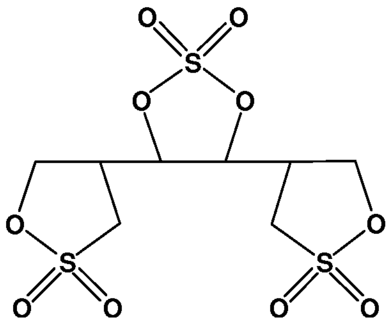

Compound 16

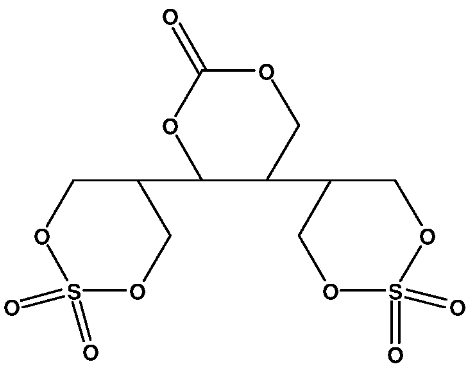

Compound 17

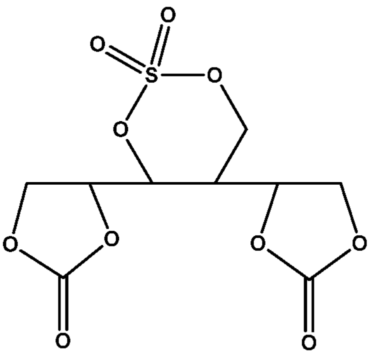

Compound 18

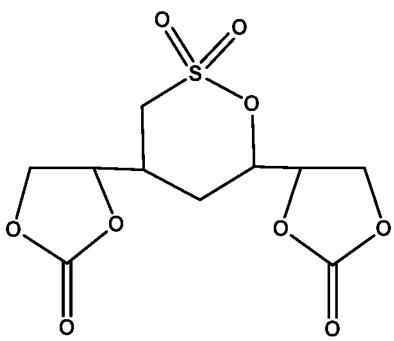

Compound 19

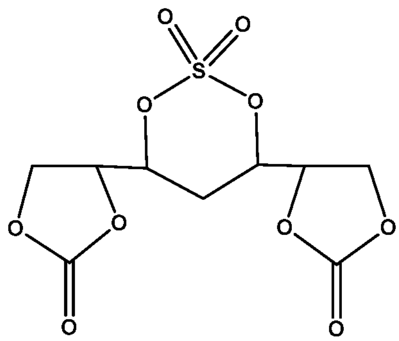

Compound 20

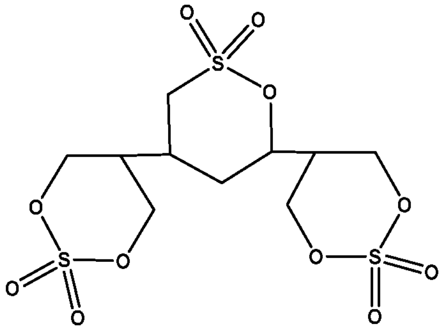

Compound 21

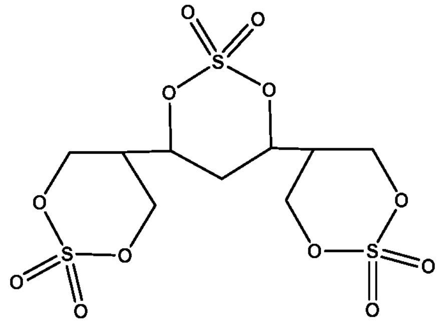

Compound 22.

It should be noted that the above are only the preferred compounds of the present application, and shall not be considered as limitations of the present application.

With the structural formula of the compound represented by structural formula 1, a person skilled in the art may obtain the preparation methods of the above compounds according to the common knowledge in the chemical synthesis field. For example, compound 7 may be prepared by the following method.

Put organic solvents such as sorbitol, dimethyl carbonate, methanol alkaline catalyst potassium hydroxide and DMF into a reaction container, allow them to react for several hours under heating conditions, add a certain amount of oxalic acid to adjust the pH value to be neutral, then filter and recrystallize to obtain an intermediate product 1, and then perform esterification reaction on the intermediate product 1, carbonate, thionyl chloride and the like under high temperature conditions to obtain an intermediate product 2, and oxidize the intermediate product 2 by using an oxidant such as sodium periodate and the like to obtain a compound 7.

In some embodiments, the lithium-ion battery is a pouch battery or an ebonite battery.

In some embodiments, the positive electrode further includes a positive electrode current collector, and the positive electrode material layer is formed on the surface of the positive electrode current collector.

The positive electrode current collector is selected from metal materials that can conduct electrons. Preferably, the positive electrode current collector includes one or more of Al, Ni, tin, copper and stainless steel. In a more preferred embodiment, the positive electrode current collector is selected from aluminum foil.

In some embodiments, the positive electrode material layer further includes a positive electrode binder and a positive electrode conductive agent.

The positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, and thermoplastic resins such as thermoplastic polyimide, polyethylene and polypropylene, as well as acrylic resin, carboxymethyl cellulose sodium, and styrene butadiene rubbe.

The positive electrode conductive agent includes at least one of conductive carbon black, conductive carbon spheres, conductive graphite, conductive carbon fiber, carbon nanotubes, graphene or reduced graphene oxide.

In some embodiments, the negative electrode includes a negative electrode material layer, and the negative electrode material layer includes a negative electrode active material.

In a preferred embodiment, the negative active material includes at least one of a carbon-based negative electrode, a silicon-based negative electrode, a tin-based negative electrode and a lithium negative electrode. The carbon-based negative electrode may include graphite, hard carbon, soft carbon, graphene, mesophase carbon microspheres, etc. The silicon-based negative electrode may include silicon material, silicon oxide, silicon-carbon composite material, silicon alloy material, etc. The tin-based negative electrode may include tin, tin carbon, tin oxide and tin metal compounds. The lithium negative electrode may include metallic lithium or lithium alloy. The lithium alloy may be at least one of lithium silicon alloy, lithium sodium alloy, lithium potassium alloy, lithium aluminum alloy, lithium tin alloy and lithium indium alloy.

In some embodiments, the negative electrode material layer further includes a negative electrode binder and a negative electrode conductive agent. The negative electrode active material, the negative electrode binder and the negative electrode conductive agent are blended to obtain the negative electrode material layer.

The possible ranges of the negative electrode binder and the negative electrode conductive agent are the same as those of the positive electrode binder and the positive electrode conductive agent respectively, and the details are not repeated here.

In some embodiments, the negative electrode plate further includes a negative electrode current collector, and the negative electrode material layer is formed on the surface of the negative electrode current collector.

The negative current collector is selected from metal materials that can conduct electrons. Preferably, the negative current collector includes at least one of Al, Ni, tin, copper and stainless steel. In a more preferred embodiment, the negative current collector is selected from copper foil.

In some embodiments, the lithium salt includes at least one of $LiPF_6$, LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, $LiSO_2F$, LiTOP, LiDODFP and lithium salts of lower aliphatic carboxylic acids.

In some embodiments, the concentration of the lithium salt in the non-aqueous electrolyte is 0.1mol/L-8mol/L. In a preferred embodiment, the concentration of the lithium salt in the non-aqueous electrolyte is 0.5mol/L-2.5mol/L. Specifically, the concentration of the lithium salt in the non-aqueous electrolyte may be 0.5mol/L, 1mol/L, 1.5mol/L, 2mol/L and 2.5mol/L.

In some embodiments, the non-aqueous organic solvent includes at least one of ether solvent, nitrile solvent, carbonate solvent and carboxylic ester solvent.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran ($2-CH_3$-THF) and 2-trifluoromethyltetrahydrofuran ($2-CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Dimethoxymethane, diethoxymethane and ethoxymethoxymethane with low viscosity and high ionic conductivity are particularly preferred because the solvability of chain ether and lithium-ions is high and the ion dissociation can be improved. Ether compounds may be used alone or in any combinations and ratios of two or more kinds. The addition amount of ether compound is not particularly limited, which is within the range of not significantly damaging the effect of the high-voltage lithium-ion battery of the present application. In the non-aqueous solvent volume ratio of 100%, the volume ratio is usually 1% or more, preferably 2% or more, more preferably 3% or more. Moreover, the volume ratio is usually 30% or less, preferably 25% or less, and more preferably 20% or less. When two or more ether compounds are used in combination, the total amount of ether compounds only needs to be in the above range. When the addition amount of ether compounds is within the above preferred range, it is easy to ensure the improvement effects of ionic conductivity brought by the increase of lithium-ion dissociation degree and the decrease of viscosity of chain ether. In addition, when the negative electrode active material is a carbon material, the co-intercalation reaction of the chain ether and lithium-ions can be suppressed, so that the input-output characteristics and the charge-discharge rate characteristics can be within an appropriate range.

In some embodiments, it is also preferable to use chain carbonates with fluorine atoms (hereinafter referred to as "fluorinated chain carbonates"). The number of fluorine atoms in the fluorinated chain carbonate is not particularly limited as long as it is 1 or more, but it is usually 6 or less, preferably 4 or less. When the fluorinated chain carbonate has multiple fluorine atoms, these fluorine atoms can be bonded to the same carbon or to different carbons. Examples of the fluorinated chain carbonates include fluorinated dimethyl carbonate derivatives, fluorinated ethyl methyl carbonate derivatives and fluorinated diethyl carbonate derivatives.

In some embodiments, the nitrile solvent may be, but is not limited to, one or more of acetonitrile, glutaronitrile and malononitrile.

In some embodiments, the carbonate solvent includes a cyclic carbonate or a chain carbonate. The cyclic carbonate may be but not limited to one or more of ethylene carbonate (EC), propene carbonate (PC), $\gamma$-butyrolactone (GBL) and butylene carbonate (BC). The chain carbonate may be but not limited to one or more of dimethyl carbonate (DMC), ethyl methyl carbonate (EMC), diethyl carbonate (DEC) and dipropyl carbonate (DPC). The content of cyclic carbonate is not particularly limited, which is within the range of not significantly damaging the effect of the high-voltage lithium-ion battery of the present application. However, in the case where one is used alone, the minimal content is usually 3% by volume or more, preferably 5% by volume or more, relative to the total amount of the solvent in the non-aqueous electrolyte. With this range, the decrease of conductivity caused by the decrease of the dielectric constant of the non-aqueous electrolyte can be avoided, so the high-current discharge characteristics, the stability with respect to the negative electrode and the cycle characteristics of the non-aqueous electrolyte battery can easily reach a good range. In addition, the maximum content is usually 90% or less by volume, preferably 85% or less by volume, and more preferably 80% or less by volume. With this range, the oxidation/reduction resistance of the non-aqueous electrolyte can be improved, thus contributing to the improvement of the stability during high-temperature storage. The content of the chain carbonate is not particularly limited, but it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. By setting the content of the chain carbonate in the above range, the viscosity of the non-aqueous electrolyte can be easily kept with an appropriate range, and the decrease of ionic conductivity can be suppressed, thus contributing to a good range of the output characteristics of the non-aqueous electrolyte battery. When two or more kinds of chain carbonates are used in combination, the total amount of the chain carbonate only needs to be in the above range.

In some embodiments, it is also preferable to use chain carbonates with fluorine atoms (hereinafter referred to as "fluorinated chain carbonates"). The number of fluorine atoms in the fluorinated chain carbonate is not particularly limited as long as it is 1 or more, but it is usually 6 or less, preferably 4 or less. When the fluorinated chain carbonate has multiple fluorine atoms, these fluorine atoms can be bonded to the same carbon or to different carbons. Examples of the fluorinated chain carbonates include fluorinated dimethyl carbonate derivatives, fluorinated ethyl methyl carbonate derivatives and fluorinated diethyl carbonate derivatives.

Carboxylic acid solvent includes cyclic carboxylic ester and/or chain carbonic ester. Examples of cyclic carboxylic ester include at least one of γ-butyrolactone, γ-valerolactone and δ-valerolactone. Examples of chain carbonic ester include one or more of methyl acetate (MA), ethyl acetate (EA), n-propyl acetate (EP), butyl acetate, propyl propionate (PP) and butyl propionate.

In some embodiments, sulfone solvent includes cyclic sulfones and chain sulfones, but preferably, in the case of cyclic sulfones, it is usually a compound with 3-6 carbon atoms, preferably 3-5 carbon atoms; and in the case of chain sulfones, it is usually a compound with 2-6 carbon atoms, preferably 2-5 carbon atoms. The addition amount of the sulfone solvent is not particularly limited, which is within the range of not significantly damaging the effect of the lithium-ion battery of the present application. Compared with the total amount of solvent in non-aqueous electrolyte, the volume ratio is usually 0.3% or more, preferably 0.5% or more, more preferably 1% or more. Moreover, the volume ratio is usually 40% or less, preferably 35% or less, and more preferably 30% or less. When two or more kinds of sulfone solvent are used in combination, the total amount of the sulfone solvents only needs to meet the above range. When the addition amount of sulfone solvent is within the above range, the non-aqueou electrolyte with excellent high-temperature storage stability is easily to be obtained.

In a preferred embodiment, the non-aqueous organic solvent includes at least one of ethylene carbonate, dimethyl carbonate, diethyl carbonate, ethyl methyl carbonate, propene carbonate, butyl acetate, γ -butyrolactone, propyl propionate, ethyl propionate, ethyl butyrate, methyl acetate, ethyl acetate, ethyl fluoroacetate and fluoroether.

In a preferred embodiment, the non-aqueou solvent is a mixture of cyclic carbonic ester and chain carbonic ester.

In some embodiments, the additive further includes at least one of cyclic sulfate compounds, cyclic carbonate compounds, phosphate compounds, borate compounds and nitrile compounds;

Preferably, the content of the additive is 0.01%-30% based on the total mass of the non-aqueous electrolyte being 100%.

**In** some embodiments, the cyclic sulfate compound is at least one selected from the group consisting of ethylene sulfate, propylene sulfate, methyl ethylene sulfate,

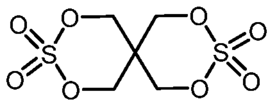

and

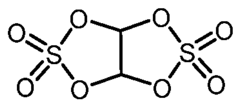
;

the cyclic carbonate compound is selected from at least one of vinylene carbonate, vinylethyl carbonate, methylene ethylene carbonate, fluoroethylene carbonate, trifluoromethyl ethylene carbonate, bis-fluoroethylene carbonate or a compound represented by structural formula 2,

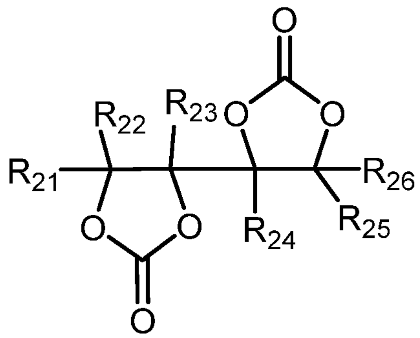

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is selected from at least one of tri (trimethylsilane) phosphate, tri (trimethylsilane) phosphite or a compound represented by structural formula 3:

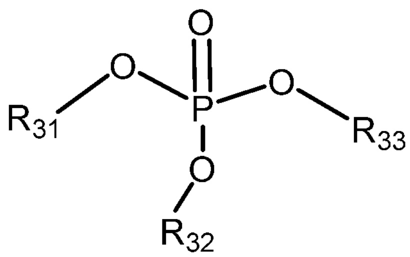

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, -Si($C_mH_{2m+1}$)$_3$, m is a natural number of 1-3, and at least one of $R_{31}$, $R_{32}$ and $R_{33}$ is unsaturated hydrocarbon group;

In a preferred embodiment, the phosphate compound represented by structural formula 3 may be at least one selected from the group consisting of phosphoric acid tripropargyl ester, dipropargyl methyl phosphonate, dipropargyl ethyl phosphate, dipropargyl propyl phosphate, dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2, 2, 2-trifluoroethyl phosphate, diallyl-3, 3, 3-trifluoropropyl phosphate or diallyl hexafluoroisopropyl phosphate;

the borate compound is selected from at least one of tris (trimethylsilane) borate and tris (triethyl silicane) borate; and the nitrile compound is selected from at least one of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the additive may also include other additives that can improve the performance of the battery. For example, additives that can improve the safety performance of the battery, flame retardant additives such as fluorophosphate and cyclophosphazene, or overcharge prevention additives such as tert.-amylbenzene and tert-butyl benzene.

It should be noted that, unless otherwise specified, in general, the content of any optional substance for the additive in the non-aqueous electrolyte is less than 10%, preferably 0.1-5%, and more preferably 0.1%-2%. Specifically, the content of any optional substance fro the additive may be0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5%, 10%.

In some embodiments, when the additive is selected from fluoroethylene carbonate, the content of the fluoroethylene carbonate is 0.05%-30% based on the total mass of the non-aqueous electrolyte being 100%.

In some embodiments, the lithium-ion battery further includes a separator, and the separator is positioned between the positive electrode and the negative electrode.

The separator is an existing conventional diaphragm, which may be a ceramic diaphragm, a polymer diaphragm, a nonwoven fabric, an inorganic-organic composite diaphragm, etc. The polymer diaphragm is selected from one or more

of polyolefins, polyamides, polysulfones, polyphosphazenes, polyethersulfones, polyetheretherketones, polyetheramides and polyacrylonitrile, including but not limited to single-layer PP (polypropylene), single-layer PE (polyethylene), double-layer PP/PE, double-layer PP/PP, triple-layer PP/PE/PP and other diaphragm.

In a preferred embodiment, the separator includes a substrate diaphragm and a surface coating, and the surface coating is inorganic particles or organic gel or a mixture of the two and is coated on at least one side surface of the substrate diaphragm.

The present application will be further illustrated with embodiments and examples.

The compounds mentioned in the following embodiments and comparative examples are shown in the following table:

Table 1

| | | |
|---|---|---|
| 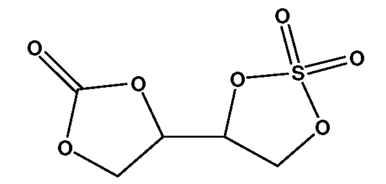 | 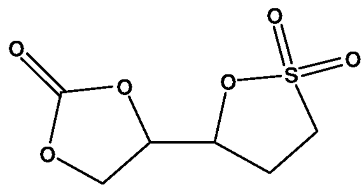 | 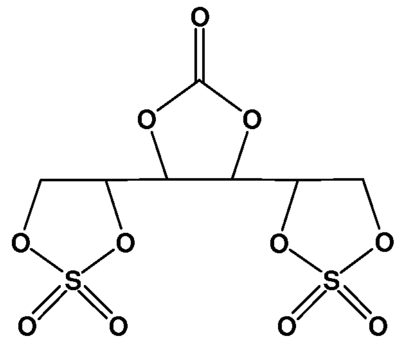 |
| Compound 1 | Compound 3 | Compound 7 |
| 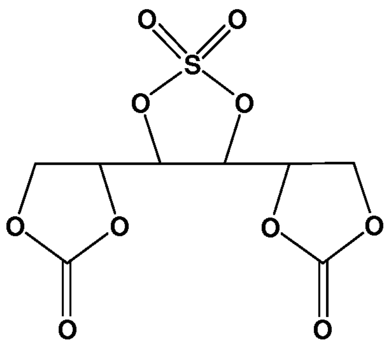 | 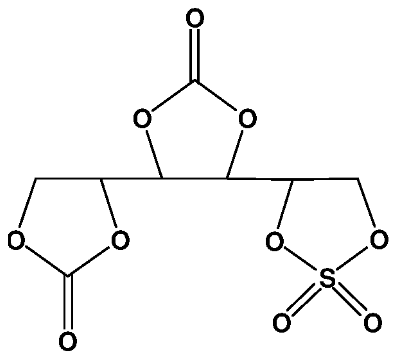 | 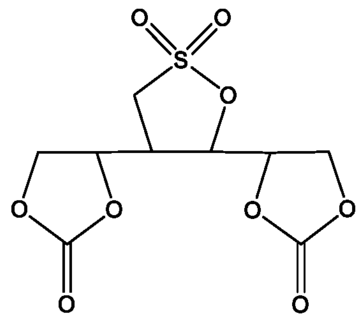 |
| Compound 8 | Compound 10 | Compound 12 |

Table 2 Parameter Design of Embodiments and Comparative examples

| Group | Compounds represented by structural formula 1 | Percentage mass content (a) of element Al in the positive electrode material layer /% | Types of the first additives | Percentage mass content (b) of the first additive in the non-aqueous electrolyte /% | Percentage mass content (c) of the second additive in the non-aqueous electrolyte /% | Supplemental additives and their contents /% | a/c | b/c |
|---|---|---|---|---|---|---|---|---|
| Embodiment 1 | Compound 7 | 0.2 | PS | 0.2 | 0.3 | - | 0.7 | 0.7 |
| Embodiment 2 | Compound 7 | 0.3 | PS | 0.5 | 0.4 | - | 0.8 | 1.3 |
| Embodiment 3 | Compound 7 | 0.3 | PS | 0.1 | 0.2 | - | 1.5 | 0.5 |

(continued)

| Group | Compounds represented by structural formula 1 | Percentage mass content (a) of element Al in the positive electrode material layer /% | Types of the first additives | Percentage mass content (b) of the first additive in the non-aqueous electrolyte /% | Percentage mass content (c) of the second additive in the non-aqueous electrolyte /% | Supplemental additives and their contents /% | a/c | b/c |
|---|---|---|---|---|---|---|---|---|
| Embodiment 4 | Compound 7 | 0.4 | PS | 1 | 0.5 | - | 0.8 | 2.0 |
| Embodiment 5 | Compound 7 | 0.5 | PS | 0.5 | 0.5 | - | 1.0 | 1.0 |
| Embodiment 6 | Compound 7 | 0.7 | PS | 2 | 2 | - | 0.4 | 1.0 |
| Embodiment 7 | Compound 7 | 0.8 | PS | 1 | 0.6 | - | 1.3 | 1.7 |
| Embodiment 8 | Compound 7 | 0.4 | PS | 0.6 | 0.1 | - | 4.0 | 6.0 |
| Embodiment 9 | Compound 7 | 1 | PS | 3 | 2 | - | 0.5 | 1.5 |
| Embodiment 10 | Compound 7 | 0.6 | PS | 2 | 2 | - | 0.3 | 1.0 |
| Embodiment 11 | Compound 7 | 0.5 | PS | 0.5 | 0.6 | - | 0.8 | 0.8 |
| Embodiment 12 | Compound 7 | 1 | PS | 3 | 0.6 | - | 1.7 | 5.0 |
| Embodiment 13 | Compound 7 | 1 | PS | 4 | 0.2 | - | 5.0 | 20.0 |
| Embodiment 14 | Compound 7 | 0.5 | PS | 3 | 0.5 | - | 1.0 | 6.0 |
| Embodiment 15 | Compound 7 | 0.5 | PS | 2 | 0.5 | - | 1.0 | 4.0 |
| Embodiment 16 | Compound 7 | 0.3 | PS | 1 | 0.5 | - | 0.6 | 2.0 |
| Embodiment 17 | Compound 7 | 0.7 | PS | 2.5 | 0.5 | - | 1.4 | 5.0 |
| Embodiment 18 | Compound 7 | 0.5 | PS | 2 | 0.2 | - | 2.5 | 10.0 |
| Embodiment 19 | Compound 7 | 0.9 | PS | 0.1 | 0.2 | - | 4.5 | 0.5 |
| Embodiment 20 | Compound 7 | 0.5 | PS | 1.5 | 5 | - | 0.1 | 0.3 |
| Embodiment 21 | Compound 7 | 0.6 | PS | 5 | 2.5 | - | 0.2 | 2.0 |
| Embodiment 22 | Compound 7 | 0.9 | PS | 2 | 3 | - | 0.3 | 0.7 |

(continued)

| Group | Compounds represented by structural formula 1 | Percentage mass content (a) of element Al in the positive electrode material layer /% | Types of the first additives | Percentage mass content (b) of the first additive in the non-aqueous electrolyte /% | Percentage mass content (c) of the second additive in the non-aqueous electrolyte /% | Supplemental additives and their contents /% | a/c | b/c |
|---|---|---|---|---|---|---|---|---|
| Embodiment 23 | Compound 7 | 0.8 | PS | 2 | 4 | - | 0.2 | 0.5 |
| Embodiment 24 | Compound 7 | 0.5 | PS | 2 | 0.8 | - | 0.6 | 2.5 |
| Embodiment 25 | Compound 1 | 0.4 | PS | 1 | 0.5 | - | 0.8 | 2.0 |
| Embodiment 26 | Compound 3 | 0.4 | PS | 1 | 0.5 | - | 0.8 | 2.0 |
| Embodiment 27 | Compound 8 | 0.4 | PS | 1 | 0.5 | - | 0.8 | 2.0 |
| Embodiment 28 | Compound 10 | 0.4 | PS | 1 | 0.5 | - | 0.8 | 2.0 |
| Embodiment 29 | Compound 12 | 0.4 | PS | 1 | 0.5 | - | 0.8 | 2.0 |
| Embodiment 30 | Compound 7 | 0.4 | PST | 1 | 0.5 | - | 0.8 | 2.0 |
| Embodiment 31 | Compound 7 | 0.4 | BS | 1 | 0.5 | - | 0.8 | 2.0 |
| Embodiment 32 | Compound 7 | 0.4 | PS | 1 | 0.5 | VC: 1 | 0.8 | 2.0 |
| Embodiment 33 | Compound 7 | 0.4 | PS | 1 | 0.5 | FEC: 5 | 0.8 | 2.0 |
| Embodiment 34 | Compound 7 | 0.4 | PS | 1 | 0.5 | HTCN: 1 | 0.8 | 2.0 |
| Comparative example 1 | Compound 7 | - | PS | 0.5 | 0.5 | - | - | 1.0 |
| Comparative example 2 | Compound 7 | 0.5 | - | - | 0.5 | - | 1.0 | - |
| Comparative example 3 | - | 0.5 | PS | 0.5 | - | - | - | - |
| Comparative example 4 | Compound 7 | 0.1 | PS | 0.5 | 0.5 | - | 0.2 | 1.0 |
| Comparative example 5 | Compound 7 | 1.2 | PS | 1 | 0.5 | - | 2.4 | 2.0 |
| Comparative example 6 | Compound 7 | 0.6 | PS | 6 | 1 | - | 0.6 | 6.0 |
| Comparative example 7 | Compound 7 | 0.4 | PS | 0.08 | 0.2 | - | 2.0 | 0.4 |

(continued)

| Group | Compounds represented by structural formula 1 | Percentage mass content (a) of element Al in the positive electrode material layer /% | Types of the first additives | Percentage mass content (b) of the first additive in the non-aqueous electrolyte /% | Percentage mass content (c) of the second additive in the non-aqueous electrolyte /% | Supplemental additives and their contents /% | a/c | b/c |
|---|---|---|---|---|---|---|---|---|
| Comparative example 8 | Compound 7 | 0.4 | PS | 1 | 0.08 | - | 5.0 | 12.5 |
| Comparative example 9 | Compound 7 | 1 | PS | 2 | 5.5 | - | 0.2 | 0.4 |
| Comparative example 10 | Compound 7 | 0.2 | PS | 5 | 0.2 | - | 1.0 | 25.0 |
| Comparative example 11 | Compound 7 | 0.5 | PS | 3 | 0.1 | - | 5.0 | 30.0 |
| Comparative example 12 | Compound 7 | 0.7 | PS | 1 | 0.1 | - | 7.0 | 10.0 |
| Comparative example 13 | Compound 7 | 0.6 | PS | 0.5 | 0.1 | - | 6.0 | 5.0 |
| Comparative example 14 | Compound 7 | 0.6 | PS | 2.5 | 0.1 | - | 6.0 | 25.0 |
| Comparative example 15 | Compound 7 | 0.1 | PS | 0.5 | 3 | - | 0.03 | 0.2 |
| Comparative example 16 | Compound 7 | 0.5 | PS | 0.1 | 3 | - | 0.2 | 0.03 |

Embodiment 1

This embodiment is used to illustrate the lithium-ion battery and its preparation method, including the following steps:

1) Preparation of electrolyte

Ethylene carbonate (EC), diethyl carbonate (DEC) and ethyl methyl carbonate (EMC) were mixed according to the mass ratio of EC: DEC: EMC = 1: 1: 1, then lithium hexafluorophosphate ($LiPF_6$) was added until the molar concentration was 1mol/L, and then 0.3% of compound 7 and 0.2% of 1,3- propane sultone(PS) were added, based on the total mass of electrolyte being 100%.

2) Preparation of positive electrode plate

The lithium cobalt oxide doped or coated with aluminum, conductive carbon black Super-P and binder polyvinylidene fluoride (PVDF) were evenly mixed, then they were dispersed in N-methyl-2-pyrrolidone (NMP) to obtain a positive electrode slurry. The slurry was evenly coated on both sides of aluminum foil, dried, calendered and vacuum-dried to obtain a positive electrode material layer. A positive electrode plate was obtained by welding aluminum lead wires with an ultrasonic welder, with a thickness of 120-150 μm, and the percentage mass content of element Al in the positive electrode material layer was 0.2%..

3) Preparation of negative electrode plate

The negative electrode active materials of artificial graphite, conductive carbon black Super-P, binder styrene-butadiene rubber (SBR) and carboxymethyl cellulose (CMC) were mixed according to the mass ratio of 94:1:2.5:2.5, then they were dispersed in deionized water to obtain a negative electrode slurry. The slurry was evenly coated on both sides of copper foil, dried, calendered and vacuum-dried. A negative electrode plate was obtained by welding nickel lead wires with an ultrasonic welder, with a thickness of 120-150 μm.

4) Preparation of battery core

A three-layer separator with a thickness of 20 μm was placed between the positive electrode plate and negative electrode plate, and then the sandwich structure consisting of the positive electrode plate, negative electrode plate and separator was wound, and then the wound body was put into an aluminum foil packaging bag and baked in vacuum at 75°C for 48 hours to obtain a battery core to be injected with liquid.

5) Injection and formation of battery core

In a glove box with the dew point controlled below -40°C, the prepared electrolyte was injected into the battery core, and then it was packed and sealed in vacuum condition and let stand for 24 hours.

Then, formation of the first charge was performed according to the following steps: charging at 0.05C constant current for 180min, charging at 0.2C constant current to 3.95V, sealing in vaccum condition for the second time, further charging at 0.2C constant current to 4.48V, and fully discharging at 0.2 C constant current to 3.0V.

Embodiment 2-34

Embodiments 2-34 are used to illustrate the lithium-ion battery and preparation method disclosed in the present application, including most of the steps in Embodiment 1, with the following differences:

the positive electrode plate components, surface roughness and electrolyte additive components were adopted according to Table 2.
the additives, contents and percentage mass content of Al in the positive electrode material layer corresponding to Embodiments 2-34 were adopted according to Table 2.

Comparative example 1-16

Comparative examples 1-16 are used to comparatively illustrate the lithium-ion battery and preparation method disclosed in the present application, including most of the steps in Embodiment 1, with the following differences:
the additives, contents and percentage mass content of Al in the positive electrode material layer corresponding to Comparative examples 1-16 were adopted according to Table 2.

Performance test

The following performance tests were conducted on the lithium-ion battery prepared above. High-temperature storage performance test.

After the lithium-ion battery was formed, it was charged to 4.48V at 1 C constant current and constant voltage at room temperature, and the initial discharge capacity and initial battery thickness were measured. After 21 days of storage at 60°C, it was discharged to 3.0 V at 1 C, and the retention capacity and battery thickness after storage were measured. The calculation formula is as follows:

$$\text{Battery capacity retention rate (\%)} = \text{retention capacity / initial capacity} * 100\%;$$

Expansion rate (%) = (battery thickness after storage-initial battery thickness)/initial battery thickness *100%.

High-temperature cycle performance test:

The battery was put in an oven with a constant temperature of 45°C, charged to 4.48V at 1C constant current, then charged at a constant voltage until the current dropped to 0.03C, then discharged at 1C constant current to 3.0V. The above steps were repeated. The discharge capacity and impedance of the first cycle and the last cycle were recorded, and the capacity retention rate and impedance growth rate of high-temperature cycle were calculated according to the following formula:

Capacity retention rate (%)= discharge capacity of the last cycle /discharge capacity of the first cycle * 100%

Impedance growth rate (%) = (impedance of the last cycle - impedance of the first cycle) / impedance of the first cycle * 100%

(1) Test results obtained from Embodiments 1-24 and Comparative examples 1-16 are shown in Table 3.

Table 3

| Group | Storage at 60°C for 21 days. | | Cycle at 45°C for 600 times at high temperature, 1C. | |
|---|---|---|---|---|
| | Capacity retention % | Expansion rate % | Capacity retention rate % | Impedance growth rate % |
| Embodiment 1 | 80.3 | 10.7 | 77.4 | 80.6 |
| Embodiment 2 | 84.1 | 9.6 | 84.3 | 40.8 |
| Embodiment 3 | 81.4 | 12.1 | 82.5 | 55.5 |
| Embodiment 4 | 90.3 | 2.7 | 91.2 | 20.1 |
| Embodiment 5 | 85.2 | 7.9 | 87.9 | 39.7 |
| Embodiment 6 | 87.5 | 4.3 | 88.2 | 25.8 |
| Embodiment 7 | 83.1 | 9.1 | 83.5 | 50.5 |
| Embodiment 8 | 78.3 | 12.7 | 80.6 | 90.3 |
| Embodiment 9 | 80.3 | 11.2 | 82.3 | 70.7 |
| Embodiment 10 | 86.1 | 7.7 | 88.1 | 37.5 |
| Embodiment 11 | 89.1 | 3.2 | 89.9 | 22.5 |
| Embodiment 12 | 78.1 | 13.5 | 79.2 | 85.3 |
| Embodiment 13 | 76.3 | 14.9 | 78.1 | 80.2 |
| Embodiment 14 | 82.3 | 10.0 | 80.9 | 65.1 |
| Embodiment 15 | 86.1 | 7.8 | 88.2 | 35.2 |
| Embodiment 16 | 85.5 | 8.1 | 87.7 | 42.8 |
| Embodiment 17 | 81.1 | 11.5 | 81.3 | 60.2 |
| Embodiment 18 | 79.1 | 13.2 | 81.1 | 71.7 |
| Embodiment 19 | 78.1 | 14.5 | 80.7 | 90.6 |
| Embodiment 20 | 77.0 | 15.0 | 80.6 | 80.5 |
| Embodiment 21 | 82.1 | 10.3 | 81.5 | 60.5 |
| Embodiment 22 | 80.5 | 11.2 | 83.5 | 67.5 |
| Embodiment 23 | 79.5 | 12.1 | 82.5 | 70.5 |
| Embodiment 24 | 89.5 | 12.5 | 91.1 | 25.6 |
| Comparative example 1 | 60.1 | 67.3 | 61.1 | 200.0 |
| Comparative example 2 | 68.3 | 80.5 | 64.1 | 200.5 |
| Comparative example 3 | 65.2 | 40.9 | 65.1 | 250.5 |
| Comparative example 4 | 62.1 | 65.2 | 72.1 | 180.6 |
| Comparative example 5 | 67.9 | 35.5 | 73.1 | 160.5 |

(continued)

| Group | Storage at 60°C for 21 days. | | Cycle at 45°C for 600 times at high temperature, 1C. | |
|---|---|---|---|---|
| | Capacity retention % | Expansion rate % | Capacity retention rate % | Impedance growth rate % |
| Comparative example 6 | 65.8 | 22.1 | 64.1 | 280.0 |
| Comparative example 7 | 68.9 | 77.2 | 65.1 | 190.8 |
| Comparative example 8 | 65.2 | 20.7 | 75.6 | 150.5 |
| Comparative example 9 | 70.5 | 27.5 | 69.5 | 170.5 |
| Comparative example 10 | 70.3 | 25.3 | 67.5 | 195.5 |
| Comparative example 11 | 73.2 | 29.5 | 68.1 | 170.5 |
| Comparative example 12 | 72.7 | 30.3 | 67.5 | 165.3 |
| Comparative example 13 | 73.5 | 31.2 | 67.7 | 162.1 |
| Comparative example 14 | 74.3 | 28.7 | 72.5 | 150.5 |
| Comparative example 15 | 60.5 | 62.1 | 60.3 | 220.3 |
| Comparative example 16 | 62.7 | 70.5 | 63.5 | 237.5 |

According to the test results of Embodiments 1-24 and Comparative examples 1-16, for the lithium-ion batteries using lithium cobalt oxide as a positive electrode active material, by doping or coating element aluminum in the lithium cobalt oxide active material, adding cyclic sultone and the compound represented by structural formula 1 as additives in non-aqueous electrolyte, and managing the percentage mass content (a) of element Al in the positive electrode material layer, percentage mass content (b) of the first additive in the non-aqueous electrolyte and percentage mass content (c) of the second additive in the non-aqueous electrolyte to satisify the condition: $0.1 \leq a/c \leq 5$; $0.3 \leq b/c \leq 20$, and $0.2 \leq a \leq 1$, $0.1 \leq b \leq 5$, $0.1 \leq c \leq 5$, the obtained lithium-ion battery has high capacity retention rate and low expansion rate under high-temperature storage conditions, and also has high capacity retention rate and low impedance growth rate during high temperature cycle. It indicates that the first additive and second additive can both decompose on the surface of the positive electrode material layer during the formation of battery to form an interface film, which can effectively maintain the crystal structure stability of the lithium cobalt oxide. Moreover, element Al in the positive electrode material layer can inhibit the full decomposition of the first additive and second additive during the formation of battery. This allows a portion of the first additive and second additive to remain in the non-aqueous electrolyte after the formation. In addition, the interface film on the surface of the positive electrode material layer will be damaged during the subsequent battery charging and discharging cycle or during high-temperature storage. At this stage, the first additive and second additive remaining in the non-aqueous electrolyte can continue to repair the interface film at the damaged position. This ensures the crystal structure of the positive electrode material and the stability of the non-aqueous electrolyte, and improves the storage performance and cycle performance of the lithium-ion battery at high temperature.

It can been seen from Embodiments 1-24, when the percentage mass content (a) of element Al in the positive electrode material layer, percentage mass content (b) of the first additive in the non-aqueous electrolyte and percentage mass content (c) of the second additive in the non-aqueous electrolyte further meet the conditions: $0.3 \leq a/c \leq 1$; $0.5 \leq b/c \leq 4$, it would be beneficial to further maintain the stability of the crystal structure of positive electrode materials, inhibit the decomposition of solvents in non-aqueous electrolyte, reduce the inflation deformation of lithium-ion batteries in high-temperature application, and improve the cycle life of batteries.

It can been seen from Comparative examples 4-9, if the percentage mass content (a) of element Al in the positive electrode material layer, percentage mass content (b) of the first additive in the non-aqueous electrolyte and percentage mass content (c) of the second additive in the non-aqueous electrolyte meet the condition: $0.1 \leq a/c \leq 5$; $0.3 \leq b/c \leq 20$, while the value of a, b or c does not fall within the range, the lithium-ion battery still does not have good high-temperature cycle performance and high-temperature storage performance. For example, from comparative examples 4 and 5, it can be seen that when the Al content in the positive electrode material layer is too high, it would affect the formation of the interface film on the surface of the positive electrode material layer, and also lead to the decrease of the content of the positive electrode active material. When the Al content in the positive electrode material layer is too low, the cycle performance of lithium-ion battery would deteriorate. It can be seen from Comparative example 6-9 that when the content of the first additive or second additive in the non-aqueous electrolyte is too low, a stable interface film cannot be formed, and the battery performance is not obviously improved. When the content of the first additive or second additive in the non-aqueous electrolyte is too high, the interface film on the surface of the positive electrode material layer would be too thick, which will lead to the increase of impedance, and then affect the capacity retention rate and impedance growth rate of the battery during high-temperature cycle. The above indicates that the values of a, b and c have a strong correlation in improving the high-temperature performance of lithium-ion batteries. Similarly, from the comparative examples 10-16, it can be seen that if the value of a, b or c falls within the range, while the value of a/c, or b/c does not meet the above preset conditions, the improvement of battery performance is not obvious.

(2) The test results obtained from Embodiments 3 and 25-29 are shown in Table 4.

Table 4

| Group | Storage at 60°C for 21 days. | | Cycle at 45°C for 600 times at high temperature, 1C. | |
|---|---|---|---|---|
| | Capacity retention % | Expansion rate % | Capacity retention rate % | Impedance growth rate % |
| Embodiment 3 | 81.4 | 12.1 | 82.5 | 55.5 |
| Embodiment 25 | 90.2 | 3.0 | 91.1 | 20.5 |
| Embodiment 26 | 87.2 | 4.6 | 87.1 | 30.2 |
| Embodiment 27 | 89.8 | 3.4 | 90.9 | 23.3 |
| Embodiment 28 | 88.1 | 4.5 | 89.3 | 27.5 |
| Embodiment 29 | 86.7 | 6.2 | 85.5 | 33.5 |

According to the test results of Embodiment 3 and Embodiments 25-29, when the percentage mass content (a) of element Al in the positive electrode material layer, percentage mass content (b) of the first additive in the non-aqueous electrolyte and percentage mass content (c) of the second additive in the non-aqueous electrolyte meet the preset condition: $0.1 \le a/c \le 5$; $0.3 \le b/c \le 20$, it plays a similar role, which can improve the high-temperature storage performance and high-temperature cycle performance of lithium-ion batteries, indicating that the relationship proposed by the present application is suitable for different compounds shown in structural formula 1.

(3) The test results obtained from Embodiments 3 and 30-31 are shown in Table 5.

Table 5

| Group | Storage at 60°C for 21 days. | | Cycle at 45°C for 600 times at high temperature, 1C. | |
|---|---|---|---|---|
| | Capacity retention % | Expansion rate % | Capacity retention rate % | Impedance growth rate % |
| Embodiment 3 | 81.4 | 12.1 | 82.5 | 55.5 |
| Embodiment 30 | 89.1 | 3.5 | 90.1 | 21.2 |
| Embodiment 31 | 88.2 | 4.7 | 89.1 | 25.1 |

According to the test results of Embodiment 3 and Embodiments 30-31, for different cyclic sultone compounds, such as 1,3-propane sultone (PS), 1,4-butane sultone (BS) and 1,3- propylene sultone (PST), when the percentage mass content (a) of element Al in the positive electrode material layer, percentage mass content (b) of the first additive in the non-aqueous electrolyte and percentage mass content (c) of the second additive in the non-aqueous electrolyte meet the condition: $0.1 \le a/c \le 5$; $0.3 \le b/c \le 20$, it plays a similar role, which has a good effect on improving the high-temperature storage performance and high-temperature cycle performance of lithium-ion batteries, indicating that the relationship proposed by the present application is suitable for different cyclic sultone compounds.

(4) The test results obtained from Embodiments 3 and 32-34 are shown in Table 6.

Table 6

| Group | Storage at 60°C for 21 days. | | Cycle at 45°C for 600 times at high temperature, 1C. | |
|---|---|---|---|---|
| | Capacity retention % | Expansion rate % | Capacity retention rate % | Impedance growth rate % |
| Embodiment 3 | 81.4 | 12.1 | 82.5 | 55.5 |
| Embodiment 32 | 90.4 | 2.7 | 91.2 | 19.6 |

(continued)

| Group | Storage at 60°C for 21 days. | | Cycle at 45°C for 600 times at high temperature, 1C. | |
|---|---|---|---|---|
| | Capacity retention % | Expansion rate % | Capacity retention rate % | Impedance growth rate % |
| Embodiment 33 | 91.3 | 2.0 | 91.9 | 18.2 |
| Embodiment 34 | 92.1 | 1.7 | 92.0 | 17.5 |

According to the test results of Embodiment 3 and Embodiments 32-34, the capacity retention rate of lithium-ion batteries after high-temperature storage can be further improved by adding vinylene carbonate (VC), fluoroethylene carbonate (FEC) or hexane-1,3,6-tricarbonitrile in the battery system provided by the application. This indicates that other additives have complementary effects with the compound represented by structural formula 1 and cyclic sultone on film formation, thus further improving the capacity retention rate.

The above are merely the preferred embodiments of this application, and are not intended to limit the application. Any modification, equivalent substitution and improvement made within the spirit and principle of this application shall be included in the protection scope of this application.

## Claims

1. A lithium-ion battery, comprising a positive electrode, a negative electrode and a non-aqueous electrolyte, wherein the positive electrode comprises a positive electrode material layer, the positive electrode material layer comprises a positive electrode active material, the positive electrode active material comprises a lithium cobalt oxide doped or coated with element aluminum, the non-aqueous electrolyte comprises a non-aqueous organic solvent, a lithium salt and an additive, and the additive comprises a first additive and a second additive; the first additive comprises at least one cyclic sultone compound selected from 1,3-propane sultone, 1,4-butane sultone and 1,3- propylene sultone, and the second additive comprises a compound represented by structural formula 1:

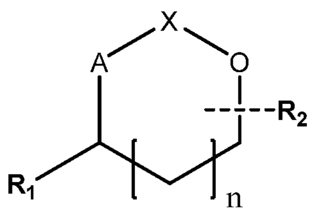

Structural formula 1

wherein n is 0 or 1, A is selected from C or O, and X is selected from

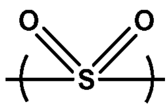

or

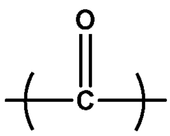

,

$R_1$ and $R_2$ are independently selected from H,

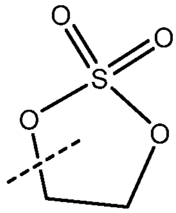,
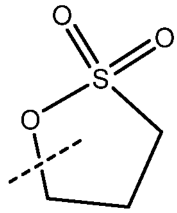,

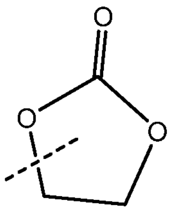,
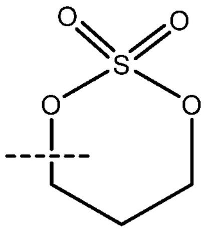
or
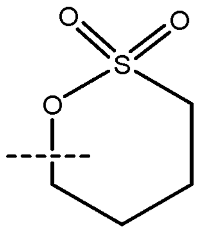,

$R_1$ and $R_2$ are not selected from H at the same time, and X, $R_1$ and $R_2$ contain at least one sulfur atom; the lithium-ion battery meets the following requirements:

$$0.1 \leq a/c \leq 5;\ 0.3 \leq b/c \leq 20, \text{ and } 0.2 \leq a \leq 1,\ 0.1 \leq b \leq 5,\ 0.1 \leq c \leq 5;$$

wherein, a is a percentage mass content of element Al in the positive electrode material layer, in %;
b is a percentage mass content of the first additive in the non-aqueous electrolyte in %; and
c is a percentage mass content of the second additive in the non-aqueous electrolyte, in%.

**2.** The lithium-ion battery of claim 1, wherein the lithium-ion battery meets the following requirements:

$$0.3 \leq a/c \leq 1;\ 0.5 \leq b/c \leq 4.$$

**3.** The lithium-ion battery of claim 1, wherein the percentage mass content (a) of element Al in the positive electrode material layer is 0.3%-0.7%.

**4.** The lithium-ion battery of claim 1, wherein the percentage mass content (b) of the first additive in the non-aqueous electrolyte is 0.5%-2%.

**5.** The lithium-ion battery of claim 1, wherein the percentage mass content (c) of the second additive in the non-aqueous electrolyte is 0.5%-2.5%.

**6.** The lithium-ion battery of claim 1, wherein the compound represented by structural formula 1 is selected from at least one of the following compounds:

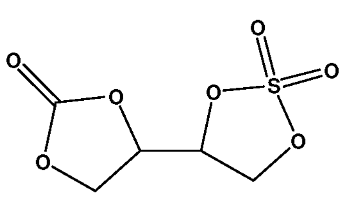
Compound 1

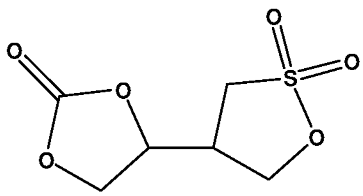
Compound 2

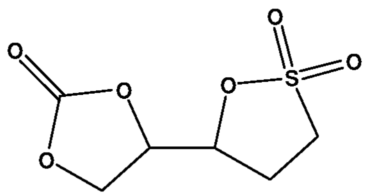
Compound 3

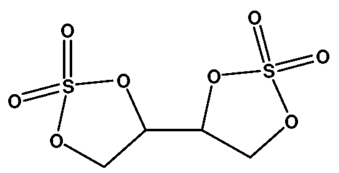

Compound 4

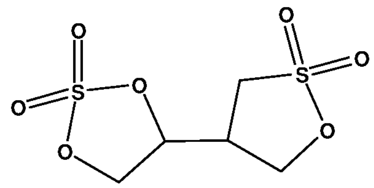

Compound 5

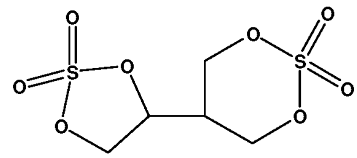

Compound 6

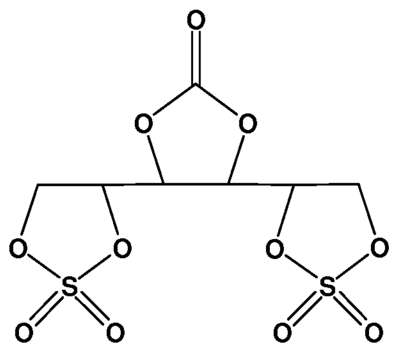

Compound 7

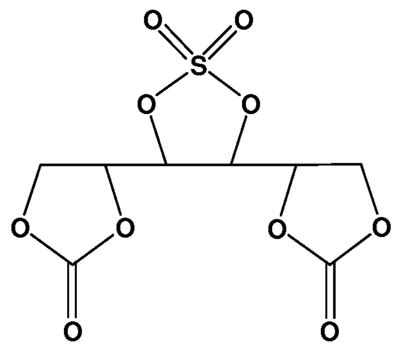

Compound 8

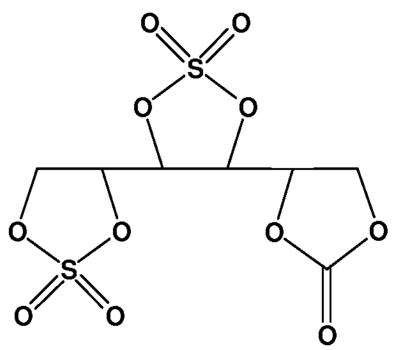

Compound 9

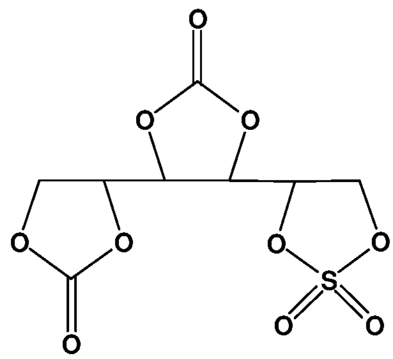

Compound 10

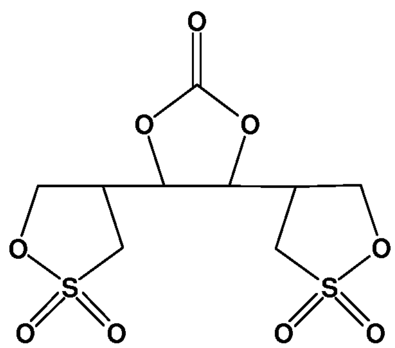

Compound 11

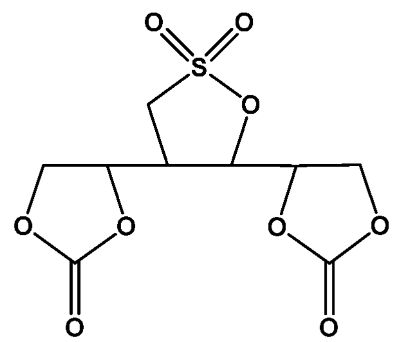

Compound 12

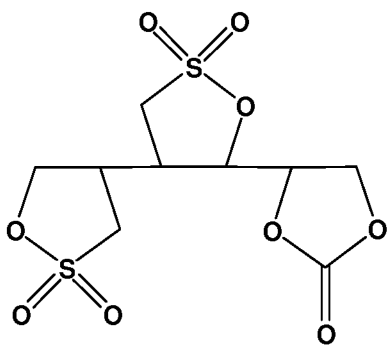

Compound 13

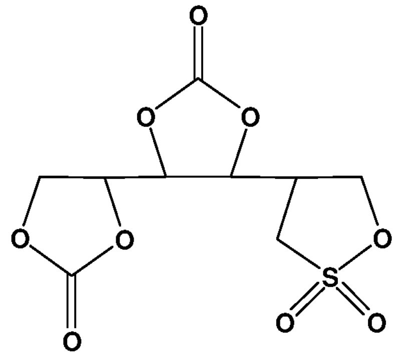

Compound 14

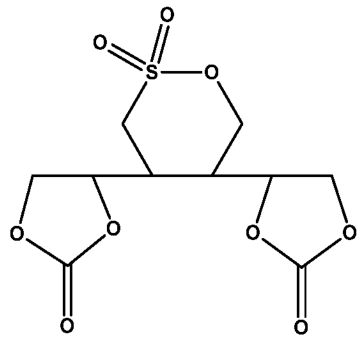

Compound 15

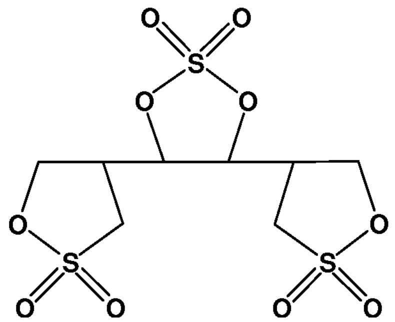

Compound 16

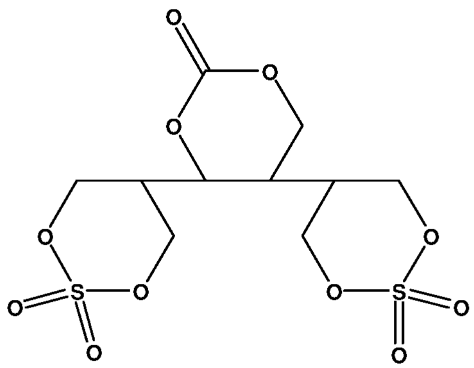

Compound 17

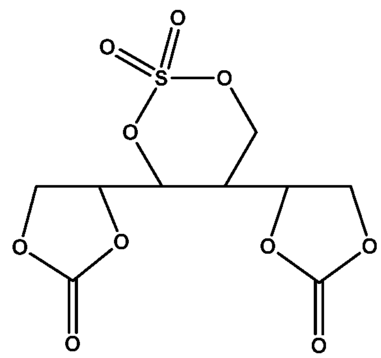

Compound 18

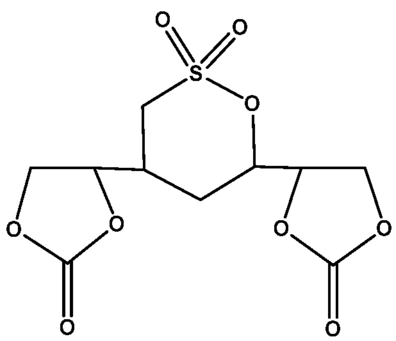

Compound 19

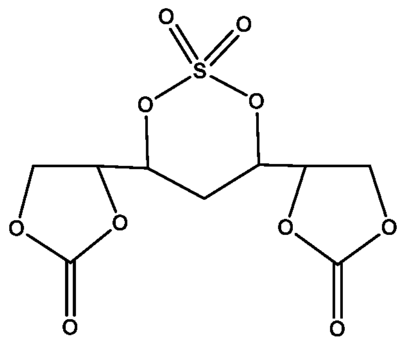

Compound 20

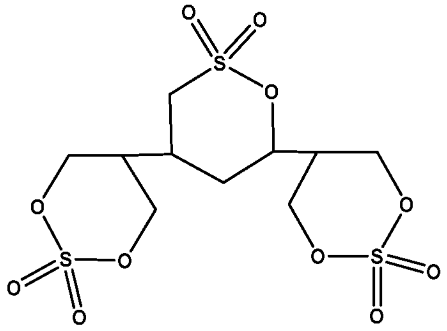

Compound 21

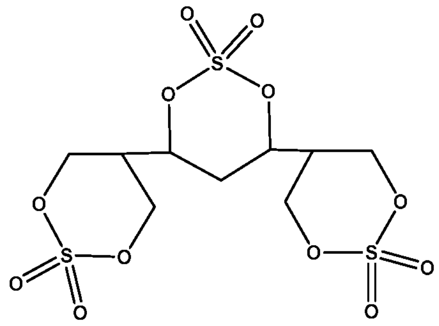

Compound 22.

**7.** The lithium-ion battery of claim 1, wherein the lithium salt comprises at least one of $LiPF_6$, LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, $LiSO_3F$, LiTOP, LiDODFP and lithium salts of lower aliphatic carboxylic acids.

**8.** The lithium-ion battery of claim 1, wherein the non-aqueous organic solvent comprises at lease one of ether solvent, nitrile solvent, carbonate solvent and carboxylic ester solvent.

**9.** The lithium-ion battery of claim 1, wherein the additive further comprises at least one of cyclic sulfate compounds, cyclic carbonate compounds, phosphate compounds, borate compounds and nitrile compounds.

**10.** The lithium-ion battery of claim 9, wherein the content of the additive is 0.01%-30% based on the total mass of the non-aqueous electrolyte being 100%.

**11.** The lithium-ion battery of claim 9, wherein the cyclic sulfate compound is at least one selected from the group consisting of ethylene sulfate, propylene sulfate, methyl ethylene sulfate,

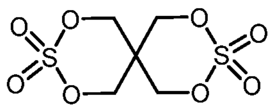 and 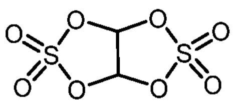 .

**12.** The lithium-ion battery of claim 9, wherein the cyclic carbonate compound is selected from at least one of vinylene carbonate, vinylethyl carbonate, methylene ethylene carbonate, fluoroethylene carbonate, trifluoromethyl ethylene carbonate, bis-fluoroethylene carbonate or a compound represented by structural formula 2,

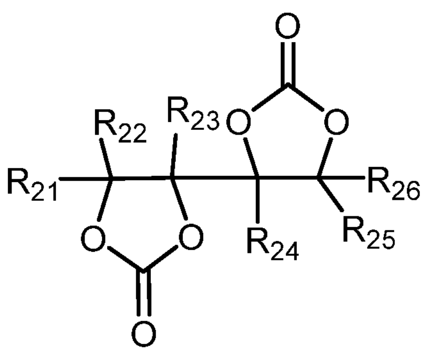

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group.

**13.** The lithium-ion battery of claim 9, wherein the phosphate compound is selected from at least one of tri (trimethylsilane) phosphate, tri (trimethylsilane) phosphite or a compound represented by structural formula 3:

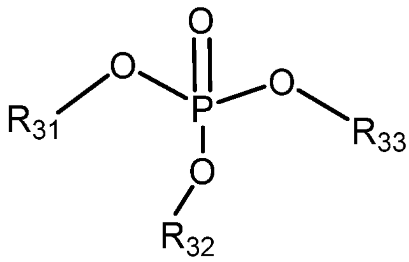

Structural formula 3

in structural formula 3, $R_{31}$, $R_{32}$ and $R_{32}$ are independently selected from a C1-C5 saturated hydrocarbon group, an unsaturated hydrocarbon group, a halogenated hydrocarbon group, $-Si(C_mH_{2m+1})_3$, m is a natural number of 1-3, and at least one of $R_{31}$, $R_{32}$ and $R_{32}$ is unsaturated hydrocarbon group.

**14.** The lithium-ion battery of claim 9, wherein the borate compound is selected from at least one of tris (trimethylsilane) borate and tris (triethyl silicane) borate.

**15.** The lithium-ion battery of claim 9, wherein the nitrile compound is selected from at least one of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

**INTERNATIONAL SEARCH REPORT**

International application No.
**PCT/CN2023/102555**

**A. CLASSIFICATION OF SUBJECT MATTER**

H01M10/0567(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC：H01M10/-

Documentation searched other than minimum documentation to the extent that such documents are included in the fields searched

Electronic data base consulted during the international search (name of data base and, where practicable, search terms used)

CNTXT, DWPI, ENTXTC, CJFD, WFNPL, ISI Web of Science: 新宙邦, 刘中波, 黄雄; 严思文; 郑仲天, 锂电池, 锂离子电池, 正极, 阳极, anode, 负极, 阴极, cathode, 非水电解液, electrolyte, 钴酸锂, liCoO2, 丙烷磺酸内酯, 丁烷磺酸内酯, 丙烯磺酸内酯, 环状磺酸酯, lithium battery, lithium cell, li-ion battery, lithium-ion battery

**C. DOCUMENTS CONSIDERED TO BE RELEVANT**

| Category* | Citation of document, with indication, where appropriate, of the relevant passages | Relevant to claim No. |
|---|---|---|
| PX | CN 115117452 A (SHENZHEN CAPCHEM TECHNOLOGY CO., LTD.) 27 September 2022 (2022-09-27)<br>claims 1-10, and description, paragraphs 7-17, and embodiments 1-34 | 1-15 |
| A | CN 114094109 A (SHENZHEN CAPCHEM TECHNOLOGY CO., LTD.) 25 February 2022 (2022-02-25)<br>claims 1-11, and description, paragraphs 5-15, and embodiments 1-49 | 1-15 |
| A | CN 114068936 A (SHENZHEN CAPCHEM TECHNOLOGY CO., LTD.) 18 February 2022 (2022-02-18)<br>claims 1-15, and description, paragraphs 6-16, and embodiments 1-40 | 1-15 |
| A | CN 114447295 A (SHENZHEN CAPCHEM TECHNOLOGY CO., LTD.) 06 May 2022 (2022-05-06)<br>claims 1-10, and description, paragraphs 6-42, and embodiments 1-34 | 1-15 |
| A | CN 102569885 A (SHENZHEN CAPCHEM TECHNOLOGY CO., LTD.) 11 July 2012 (2012-07-11)<br>claims 1-12, and description, paragraphs 8-38, and embodiments 1-22 | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 August 2023** | **21 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

INTERNATIONAL SEARCH REPORT

International application No.
PCT/CN2023/102555

**C. DOCUMENTS CONSIDERED TO BE RELEVANT**

| Category* | Citation of document, with indication, where appropriate, of the relevant passages | Relevant to claim No. |
|---|---|---|
| A | CN 111755753 A (XIANGHE KUNLUN CHEMICALS CO., LTD.) 09 October 2020 (2020-10-09)<br>claims 1-9, and description, paragraphs 5-18, and embodiments 1-4 | 1-15 |
| A | US 2019280334 A1 (TESLA MOTORS CANADA ULC.) 12 September 2019 (2019-09-12)<br>claims 1-36, and description, paragraphs 80-135 | 1-15 |
| A | WO 2016190404 A1 (MITSUI CHEMICALS INC.) 01 December 2016 (2016-12-01)<br>claims 1-10, and description, paragraphs 23-176, and embodiments 1A-4C | 1-15 |

**INTERNATIONAL SEARCH REPORT**
**Information on patent family members**

International application No.
**PCT/CN2023/102555**

| Patent document cited in search report | | | Publication date (day/month/year) | Patent family member(s) | | | Publication date (day/month/year) |
|---|---|---|---|---|---|---|---|
| CN | 115117452 | A | 27 September 2022 | None | | | |
| CN | 114094109 | A | 25 February 2022 | None | | | |
| CN | 114068936 | A | 18 February 2022 | None | | | |
| CN | 114447295 | A | 06 May 2022 | None | | | |
| CN | 102569885 | A | 11 July 2012 | None | | | |
| CN | 111755753 | A | 09 October 2020 | None | | | |
| US | 2019280334 | A1 | 12 September 2019 | JP | 2023078313 | A | 06 June 2023 |
| | | | | WO | 2019173891 | A1 | 19 September 2019 |
| | | | | JP | 2021517714 | A | 26 July 2021 |
| | | | | JP | 7288912 | B2 | 08 June 2023 |
| | | | | KR | 20200139693 | A | 14 December 2020 |
| | | | | EP | 3766122 | A1 | 20 January 2021 |
| | | | | EP | 3766122 | A4 | 04 May 2022 |
| | | | | CA | 3013596 | A1 | 12 September 2019 |
| WO | 2016190404 | A1 | 01 December 2016 | None | | | |

Form PCT/ISA/210 (patent family annex) (July 2022)